# EUROPÄISCHE PATENTANMELDUNG

(11) **EP 2 705 947 A1**
(43) Veröffentlichungstag der Anmeldung: **12.03.2014**
(21) Anmeldenummer: 12183939.3
(22) Anmeldetag: 11.09.2012
(51) Int. Cl.: B30B 9/30, B65G 25/10

(54) **Ballenpresse mit seitlichem Ballenauswurf und Verfahren zum Betrieb einer solchen Ballenpresse**

(71) Anmelder: Albers Uwe, 49779 Niederlangen (DE)
(72) Erfinder: Albers, Wilhelm, 49779 Niederlangen (DE)
(74) Vertreter: Werner & ten Brink

(57) **Zusammenfassung**

Die Erfindung betrifft eine Ballenpresse (10) für loses Pressgut, insbesondere für als Rohstoff wiederverwendbare Abfallstoffe, mit einem Hydraulikabschnitt (12), einen daran anschließenden Sammelabschnitt (14) und einem an diesen anschließenden Press- und Auswurfabschnitt (16) mit einem dort gebildeten Pressraum (18), und ein Verfahren zum Betrieb einer solchen Ballenpresse (10), wobei die Ballenpresse (10) zum Erhalt einer möglichst geringen benötigten Grundfläche Mittel (20, 62) zum seitlichen Öffnen des Pressraums (18) und Mittel (22) zum seitlichen Auswerfen eines gepressten Ballens aus dem Pressraum (18) aufweist.

## Beschreibung

Die Erfindung betrifft eine Ballenpresse für zunächst loses Pressgut, insbesondere für in Form von Papier oder sonstigen also Rohstoff wiederverwendbaren Abfallstoffen, zum Verpressen des Pressguts zu quaderförmigen Ballen. Die Erfindung betrifft im Weiteren auch ein Verfahren zum Betrieb einer solchen Ballenpresse.

Aus der DE 10 2009 053 134 A1 ist eine Ballenpresse zum Verpressen von Kartonagen und ähnlichen Abfallprodukten zu quaderförmigen Ballen bekannt. Die Ballenpresse umfasst ein Pressengehäuse, einen in diesem in einem Pressraum translatorisch beweglich angeordneten Pressstempel und eine am Ende des Pressraums in Richtung der Bewegungsrichtung des Pressstempels verschwenkbare Pressentür zur Entnahme des gepressten Ballens aus dem Pressraum. Eine Vermeidung von Verzögerungen bei der Entnahme des Ballens soll dadurch vermieden werden, dass der Ballen automatisch aus dem Pressraum ausgeworfen wird, ohne dass der Ballen verkantet. Dafür ist vorgesehen, dass an dem Pressstempel ein Auswurfkolben axial verschieblich angeordnet ist, dass der Auswurfkolben aus der Ebene des Pressstempels mittels einer separaten Antriebsvorrichtung in den Pressraum einschiebbar ist und dass mittels des Auswurfkolbens der Ballen durch eine von der Pressentür freigegebene Austrittsöffnung in Richtung des vorherigen Pressvorgangs aus dem Pressraum ausgeworfen wird.

Aus der DE 20 2009 011 314 U1 ist eine Ballenpresse zum Verdichten von losem Material, vorzugsweise von voluminösen, sperrigen und/oder kombinierbaren Abfallstoffen, zu kompakten, quaderförmigen Ballen bekannt, wobei die Ballenpresse einen Pressenkasten umfasst, dessen Innenwände einen im Wesentlichen vertikalen Pressschacht definieren, wobei wenigstens eine Wand eine Tür ist, die zur Entnahme des Ballens geöffnet wird, so dass der Ballen seitlich, also senkrecht zur Pressrichtung entnehmbar ist.

Eine Aufgabe der vorliegenden Erfindung besteht darin, eine weitere Ausführungsform einer Ballenpresse und ein Verfahren zu deren Betrieb anzugeben, wobei sich die Ballenpresse bei einer horizontalen Anordnung der davon umfassten Abschnitte, nämlich Hydraulikabschnitt, Sammelabschnitt und Pressabschnitt, und einer dadurch bedingten horizontalen Bewegungsrichtung eines zum Pressen der Ballen wirksamen Pressstempels durch eine vergleichsweise kleine benötigte Grundfläche auszeichnet.

Diese Aufgabe wird erfindungsgemäß mit einer Ballenpresse mit den Merkmalen des Anspruchs 1 gelöst. Dazu ist bei einer Ballenpresse für loses Pressgut, insbesondere für in Form von Papier oder sonstigen also Rohstoff wiederverwendbaren Abfallstoffen, mit einem Hydraulikabschnitt, einem daran anschließenden Sammelabschnitt und einem wiederum an diesen anschließenden Press- und Auswurfabschnitt mit einem dort gebildeten Pressraum vorgesehen, dass die Ballenpresse Mittel zum seitlichen Öffnen des Pressraums und Mittel zum seitlichen Auswerfen eines gepressten Ballens aus dem Pressraum aufweist.

Indem sich der Pressraum mit dafür vorgesehenen Mitteln seitlich öffnen lässt, wird der Auswurf eines gepressten Ballens durch die seitliche Öffnung des Pressraums möglich. Bei bisherigen Ballenpressen ist es üblich, dass der Auswurf des gepressten Ballens in Richtung der Bewegungsrichtung des Pressstempels der Ballenpresse erfolgt. Dann ist aber im Anschluss an die Längserstreckung der Ballenpresse Platz zum Auswerfen des gepressten Ballens und Platz zur Übernahme des gepressten Ballens erforderlich. Dieser Platzbedarf muss beim Aufstellen einer Ballenpresse berücksichtigt und entsprechender Platz muss damit beim Betrieb der Ballenpresse zur Verfügung stehen. Die Möglichkeit zum seitlichen Auswurf gepresster Ballen bei der hier und im Folgenden beschriebenen Ballenpresse bedeutet, dass in Längsrichtung der Ballenpresse tatsächlich nur der durch die Abmessungen der Ballenpresse selbst vorgegebene Platz benötigt wird. Die Ballenpresse eignet sich damit speziell zur Aufstellung in einem Entsorgungsraum oder ähnlichem, um dort anfallendes Verpackungsmaterial oder dergleichen verpressen zu können, zum Beispiel in Supermärkten, Kauf- und Warenhäusern oder dergleichen wo häufig kein besonderes großes Platzangebot besteht und folglich Anlagen mit einem kleinen sogenannten Footprint besser einsetzbar sind.

Der Vorteil der Erfindung besteht damit in der erreichten, vergleichsweise kleinen benötigten Grundfläche der Ballenpresse.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform der Ballenpresse ist vorgesehen, dass als Mittel zum seitlichen Öffnen des Pressraums eine durch mindestens ein Betätigungselement schwenkbar bewegliche und im Querschnitt L-förmige Schwinge fungiert, deren langer Schenkel den Pressraum übergreift und deren kurzer Schenkel bei abgesenkter Schwinge zum seitlichen Verschließen des Pressraums wirksam ist. Die L-förmige Kontur der Schwinge ist günstig im Hinblick auf die von dieser beim Pressvorgang aufzunehmenden Kräfte, wie dies auch im speziellen Beschreibungsteil erläutert wird. Als Betätigungselement zum Öffnen und Schließen der Schwinge kommen ein oder mehrere Hubzylinder, insbesondere in einer Ausführungsform als Hydraulikzylinder, in Betracht. Alternativ ist als Betätigungselement auch eine Hubspindel oder Ähnliches verwendbar.

Bei einer weiteren Ausführungsform der Ballenpresse ist vorgesehen, dass als Mittel zum seitlichen Auswerfen eines gepressten Ballens aus dem Pressraum eine quer zur Längsachse der Ballenpresse bewegliche Auswurfeinrichtung fungiert. Die Beweglichkeit der Auswurfeinrichtung quer zur Längsachse der Ballenpresse ermöglicht den seitlichen Auswurf gepresster Ballen. Insofern kommen als Auswurfeinrichtung ein oder mehrere quer zur Längsachse der Ballenpresse orientierte und im Bodenbereich des Pressraums umlaufende, gegebenenfalls in verschließbaren Schlitzen geführte Ketten mit Mitnehmern in Betracht. Alternativ kommt ein quer zur Längsachse der Ballenpresse durch den Pressraum beweglicher Anschlag in Betracht, der zum Beispiel von einer oder mehreren jeweils horizontal orientierten Hubspindeln geführt wird.

Bei einer speziellen Ausführungsform ist vorgesehen, dass die Auswurfeinrichtung alternierend translatorisch beweglich ist. Die Bewegung der Auswurfeinrichtung kann dann mit einem im Bodenbereich des Pressraums angeordneten Auswurfzylinder ausgelöst werden und der Vorteil der alternierend translatorischen Beweglichkeit der Auswurfeinrichtung besteht darin, dass der Auswurfzylinder innerhalb der ohnehin notwendigen Baubreite der Ballenpresse angebracht werden kann, anders als zum Beispiel bei einem Auswurfzylinder, der seitlich neben dem Pressraum angebracht ist, um mit einem Hub einen Anschlag durch den Pressraum zu bewegen. Die alternierend translatorische Beweglichkeit der Auswurfeinrichtung ermöglicht also die angestrebte vergleichsweise kleine Grundfläche der Ballenpresse. Ein seitlich angeordneter Auswurfzylinder, der mit einem Hub einen Anschlag durch den Pressraum bewegt, erhöht dagegen die Breite der Ballenpresse im Bereich des Pressraums zumindest um die jeweilige Breite des Pressraums.

Bei einer Ausführungsform der Ballenpresse ist für deren Auswurfeinrichtung vorgesehen, dass diese einen in einer Grundposition der Auswurfeinrichtung mit einer Rückwand des Pressraums fluchtenden Anschlag und vor dem Anschlag eine Mehrzahl von verstellbaren Auswerfern aufweist. Als Grundposition der Auswurfeinrichtung wird diejenige Position der Auswurfeinrichtung verstanden, die diese während des Pressvorgangs einnimmt. Die Auswurfeinrichtung ist dann zurückgezogen, so dass für den von der Auswurfeinrichtung umfassten Anschlag eine fluchtende Ausrichtung mit einer hier als Rückwand bezeichneten Seitenwand des Pressraums resultiert. Der Anschlag bildet dabei optional einen Teil der Rückwand. Vor dem Anschlag - also vor der Rückwand des Pressraums und damit im Pressraum - weist die Auswurfeinrichtung eine Mehrzahl von Auswerfern auf. Diese Auswerfer werden bei einer Bewegung der Auswurfeinrichtung zum Auswerfen des Ballens wirksam.

Bei einer weiteren Ausführungsform der Ballenpresse ist vorgesehen, dass die Auswerfer durch mit der Auswurfeinrichtung bewegte Freigabemittel freigebbar sind, derart, dass freigegebene Auswerfer aus einer Grundposition in den Pressraum eintreten können. Als Grundposition der Auswerfer wird hier und im Folgenden eine Position verstanden, bei der sich die Auswerfer unterhalb einer Bodenfläche des Pressraums befinden oder bis zur Bodenfläche des Pressraums reihen und zumindest nicht oder nur unwesentlich in den Pressraum hineinragen. Bei einer solchen Grundposition ist sichergestellt, dass die Auswerfer die Bewegung eines eventuell bis in diesen Bereich hinein bewegten Pressstempels nicht behindern. Zudem ist sichergestellt, dass beim Pressen durch die vom Pressstempel in horizontaler Richtung aufgebrachte Kraft keine Beschädigung der zur Bewegung der Auswerfer vorgesehenen Kinematik droht, und zwar weder unmittelbar durch den Pressstempel noch mittelbar durch verpresstes Pressgut. In der durch die Freigabemittel freigegebenen Konfiguration können und sollen die Auswerfer in den Pressraum eintreten, so dass sie dort beim Bewegen der Auswurfeinrichtung als am auszuwerfenden Ballen angreifende Mitnehmer wirksam werden können.

Bei einer besonderen Ausführungsform der Ballenpresse ist vorgesehen, dass die Auswerfer an der Auswurfeinrichtung schwenkbeweglich angebracht sind, dass die Auswerfer in einer Grundposition mit ihrer Oberseite fluchtend mit einer Oberfläche der Auswurfeinrichtung orientiert sind und dass die Auswerfer im freigegebenen Zustand in den Pressraum schwenken. Eine solche Schwenkbeweglichkeit erlaubt vergleichsweise einfache konstruktive Verhältnisse bei der Ausführung der Auswurfeinrichtung. Eine Schwenkbeweglichkeit ist eine Alternative zu einer ansonsten ebenfalls möglichen translatorischen Beweglichkeit der Auswerfer.

Als Freigabemittel zum Freigeben der Auswerfer kommt eine durch eine Vorschubeinrichtung translatorisch bewegliche Mitnehmerkulisse mit daran angebrachten Mitnehmern in Betracht, wobei die Mitnehmer in der Grundposition der Auswerfer an diesen anliegen. Als Vorschubeinrichtung kann dabei ein im Folgenden als Mitnehmerzylinder bezeichneter Hydraulik- oder Pneumatikzylinder fungieren, der bei Aktivierung eine translatorische Bewegung der Mitnehmerkulisse bewirkt. Durch die Vorschubeinrichtung kann also die Position der Mitnehmerkulisse beeinflusst und damit die Freigabe der Auswerfer veranlasst werden. Dafür liegen die Mitnehmer in der Grundposition der Auswerfer an diesen an und verhindern damit, dass die Auswerfer ihre Grundposition verlassen. Als Anlagefläche für die Mitnehmer kommt dabei grundsätzlich jeder mit einer Bewegung der Auswerfer ebenfalls mitbewegte Flächenabschnitt der Auswerfer in Betracht. Bei einer speziellen Ausführungsform ist vorgesehen, dass die Auswerfer als Anschlag für die Mitnehmer ein spezielles Teil, zum Beispiel einen beim Bewegen der Auswerfer mitbewegten Steg, aufweisen.

Alternativ zur Verwendung eines Mitnehmerzylinders als Teil der Freigabemittel kommt zum Beispiel auch eine horizontal orientierte Hubspindel oder dergleichen als Vorschubeinrichtung in Betracht. Je nach Anzahl und Anordnung der Auswerfer kommen eine oder mehrere Vorschubeinrichtungen zur Anwendung, wobei jede Vorschubeinrichtung auf eine ihr zugeordnete Mitnehmerkulisse wirkt.

Speziell kommt sogar eine Verwendung des Auswurfzylinders als Vorschubeinrichtung und als Teil der Freigabemittel in Betracht, wenn dieser nämlich beim Vorhub der Auswurfeinrichtung zum Beispiel eine auf die Mitnehmerkulisse wirkende Hebelmechanik betätigt. Beim Rückhub könnte die Hebelmechanik in entgegengesetzter Richtung betätigt werden, so dass eine resultierende Bewegung der Mitnehmerkulisse die Auswerfer wieder in ihre Grundposition bringt. Um eine solche Hebelmechanik alternierend betätigen zu können, kann zum Angriff des Auswurfzylinders an der Auswurfeinrichtung ein in Bewegungsrichtung der Auswurfeinrichtung orientiertes Langloch vorgesehen sein, wobei der Auswurfzylinder an einer Vorderseite des Langlochs einen Vorhub der Auswurfeinrichtung und gleichzeitig eine Bewegung der Mitnehmerkulisse zur Freigabe der Auswerfer bewirkt. An einer Rückseite des Langlochs bewirkt der Auswurfzylinder dann entsprechend einen Rückhub der Auswurfeinrichtung und eine Bewegung der Mitnehmerkulisse, die die Auswerfer in ihre Grundposition führt.

Bei einer nochmals weiteren Ausführungsform der Ballenpresse ist vorgesehen, dass jedem Auswerfer ein Aktivierungselement, insbesondere ein Aktivierungselement in Form einer Feder, insbesondere in Form einer Schraubenzugfeder, zugeordnet ist und dass das Aktivierungselement zur Verstellung des jeweiligen Auswerfers wirksam ist. Das Aktivierungselement ist dafür wirksam, dass ein durch eine entsprechende Position der Mitnehmerkulisse freigegebener Auswerfer aus seiner Grundposition ohne äußere Energiezufuhr in den Pressraum eintreten kann. Ein Beispiel für ein solches ohne äußere Energiezufuhr wirksames Aktivierungselement ist eine Feder, insbesondere eine Feder in Form einer Blatt- oder Schraubenfeder. Bei Verwendung einer Schraubenzugfeder als Aktivierungselement kann die von der Feder aufgebrachte Zugkraft genutzt werden, um den Eintritt des jeweiligen Auswerfers in den Pressraum zu ermöglichen. Eine solche Schraubenzugfeder kommt speziell bei schwenkbeweglichen Auswerfern in Betracht, während eine Blatt- oder Schraubenfeder (erstere zum Beispiel in horizontaler Orientierung, letztere zum Beispiel in vertikaler Orientierung) auch bei in vertikaler Richtung translatorisch beweglichen Auswerfern in Betracht kommt.

Die oben genannte Aufgabe wird auch mit einem Verfahren zum Betrieb einer Ballenpresse wie hier und im Folgenden beschrieben gelöst. Speziell ist dabei bei einem Verfahren zum Betrieb einer solchen Ballenpresse vorgesehen, dass nach Abschluss eines Pressvorgangs ein dadurch gebildeter gepresster Ballen aus der Ballenpresse ausgeworfen wird, indem durch Anheben der Schwinge eine Seite des Pressraums geöffnet wird und indem durch Aktvierung der Auswurfeinrichtung der gepresste Ballen seitlich ausgeworfen wird.

Wenn gemäß einer Ausführungsform des Verfahrens die Auswurfeinrichtung alternierend mehrfach mit jeweils einem Vorhub und einem anschließenden Rückhub quer zur Längsachse der Ballenpresse bewegt wird, kann ein Antrieb zur Bewegung der Auswurfeinrichtung zum Beispiel in Form eines Hydraulikzylinders in einer Unterkonstruktion der Ballenpresse angebracht werden, so dass weder die Auswurfeinrichtung selbst noch eine zum Antrieb der Auswurfeinrichtung vorgesehene Vorrichtung zu einer Erhöhung der Breite der Ballenpresse führt.

Wenn bei einem ersten Vorhub der Auswurfeinrichtung ein davon umfasster Anschlag den gepressten Ballen um eine erste Wegstrecke aus dem Pressraum bewegt und von der Auswurfeinrichtung umfasste und spätestens bei einem nächsten Vorhub der Auswurfeinrichtung freigegebene Auswerfer den gepressten Ballen anschließend um eine weitere Wegstrecke aus dem Pressraum bewegen, wobei bei jedem weiteren Vorhub der Auswurfeinrichtung weitere Auswerfer am Ballen angreifen und den Ballen jeweils sukzessive weiter aus dem Pressraum bewegen, ist sichergestellt, dass im Rahmen der alternierenden Bewegung jeder Vorhub der Auswurfeinrichtung zur einer Bewegung des auszuwerfenden Ballens führt.

Eine weitere Ausführungsform des Verfahrens sieht vor, dass die in der Auswurfeinrichtung beweglich, insbesondere schwenkbeweglich und in einer oder mehreren quer zur Längsrichtung der Ballenpresse orientierten Reihen jeweils hintereinander angeordneten Auswerfer im freigegebenen Zustand in den Pressraum eintreten können, dass ein solches Eintreten in den Pressraum durch einen eventuell aufliegenden Abschnitt des auszuwerfenden Ballens verhindert wird und dass damit sukzessive mit dem stückweisen Auswerfen des Ballens jeweils ein weiterer Auswerfer oder eine Mehrzahl nebeneinander angeordneter Auswerfer in den Pressraum eintritt. Die beweglichen und freigebbaren Auswerfer befinden sich beim Abschluss des Pressvorgangs sämtlich in ihrer Grundposition. Ein Eintritt in den Pressraum erfolgt sukzessive erst im Zusammenhang mit dem Auswerfen des Ballens. Nach der Freigabe der Auswerfer wird zunächst deren Eintritt in den Pressraum durch das aufliegende Gewicht des auszuwerfenden Ballens verhindert. Nach einem ersten Vor- und Rückhub der Auswurfeinrichtung ist mit dem Anschlag der Auswurfeinrichtung eine erste Bewegung des Ballens erreicht, wobei beim Rückhub ein oder mehrere Auswerfer von dem Gewicht des Ballens frei werden und damit in den Pressraum eintreten. Beim nächsten Vorhub bewirken diese den weiteren Auswurf des Ballens aus dem Pressraum. Beim nächsten Rückhub werden weitere Auswerfer frei und stehen beim anschließenden Vorhub zum weiteren Auswurf des Ballens zur Verfügung. Dieser Vorgang wiederholt sich durch alternierende Bewegung der Auswurfeinrichtung, bis nacheinander alle Auswerfer verwendet wurden und der Ballen ausgeworfen ist.

Wenn bei der Auswurfeinrichtung der Ballenpresse als Freigabeeinrichtung eine Vorschubeinrichtung, insbesondere in Form eines Mitnehmerzylinders, eine translatorisch bewegliche Mitnehmerkulisse und daran angebrachte Mitnehmer fungieren, zeichnet sich eine Ausführungsform des Verfahrens zum Betrieb einer solchen Ballenpresse dadurch aus, dass beim ersten Aktivieren der Freigabeeinrichtung durch die Vorschubeinrichtung die Mitnehmerkulisse in eine Position bewegt wird, in der die Mitnehmer von den Auswerfern entfernt sind und damit einen Eintritt der Auswerfer in den Pressraum freigeben und dass bei einer zweiten Aktivierung der Freigabeeinrichtung durch die Vorschubeinrichtung die Mitnehmerkulisse in eine Position bewegt wird, in der die Mitnehmer die Auswerfer oder einen Teil der Auswerfer berühren und damit einen Eintritt der Auswerfer in den Pressraum verhindern. Der Einfluss der Freigabeeinrichtung auf die Auswerfer lässt sich also durch die Vorschubeinrichtung und die dadurch bestimmte Position der Freigabekulisse(n) bestimmen. Eine erste und eine zweite Aktivierung der Vorschubeinrichtung führt also zu einer Freigabe aller Auswerfer bzw. zu einer Rückführung aller Auswerfer in ihre Grundposition. Im Rahmen einer den Betrieb der Ballenpresse ermöglichenden Steuerung der Auswurfeinrichtung kann die Freigabe aller Auswerfer damit durch eine einfache Ansteuerung der Vorschubeinrichtung veranlasst oder rückgängig gemacht werden.

Die mit der Anmeldung eingereichten Patentansprüche sind Formulierungsvorschläge ohne Präjudiz für die Erzielung weitergehenden Patentschutzes. Da speziell die Gegenstände der Unteransprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen. Des Weiteren ist die Beschreibung so auszulegen, dass jedes Vorrichtungsmerkmal eine Verwendung dieser Vorrichtung beim Betrieb der Ballenpresse und damit ein entsprechendes Verfahrensmerkmal impliziert, auch wenn dieses im Einzelnen hier nicht explizit ausformuliert sein sollte. Entsprechend ist die Beschreibung hinsichtlich der erläuterten Verfahrensmerkmale so auszulegen, dass die Ballenpresse Mittel umfasst, die dafür bestimmt und geeignet sind, einen oder mehrere zu dem Verfahrensmerkmal gehörige Verfahrensschritte auszuführen, auch wenn dieser oder diese im Einzelnen hier nicht explizit ausformuliert sein sollte bzw. sollten.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1A, FIG 1B, FIG 1C: unterschiedliche Ansichten einer Ausführungsform der erfindungsgemäßen Ballenpresse mit einer seitlich wirksamen Auswurfeinrichtung und einer zum Öffnen einer Seite eines Pressraums beweglichen Schwinge,
- FIG 2A, FIG 2B: Details der Auswurfeinrichtung im Zusammenhang mit Einzelheiten der Ballenpresse im Bereich der Position der Auswurfeinrichtung,
- FIG 3A, FIG 3B, FIG 3C, FIG 3D: die Auswurfeinrichtung in unterschiedlichen Ansichten,
- FIG 4: eine Seitenansicht der Ballenpresse in einem Querschnitt und
- FIG 5: eine Seitenansicht der Ballenpresse in einem Längsschnitt.

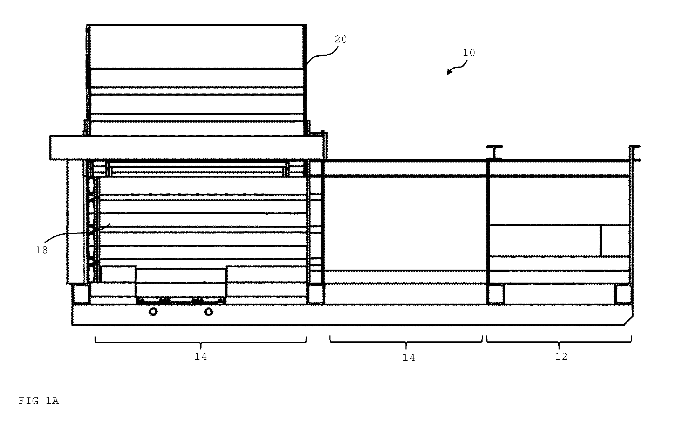

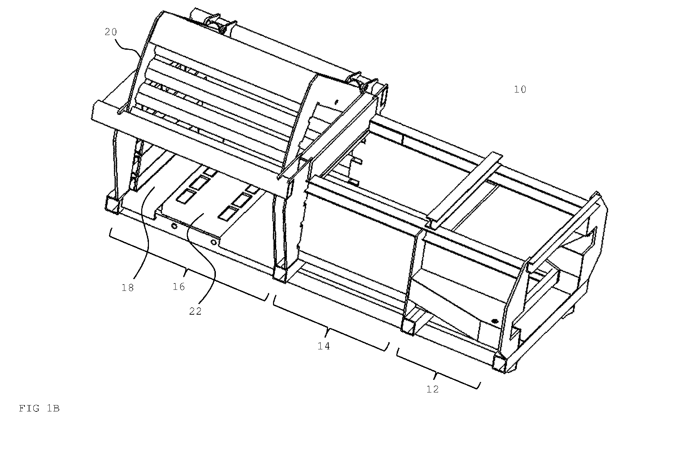

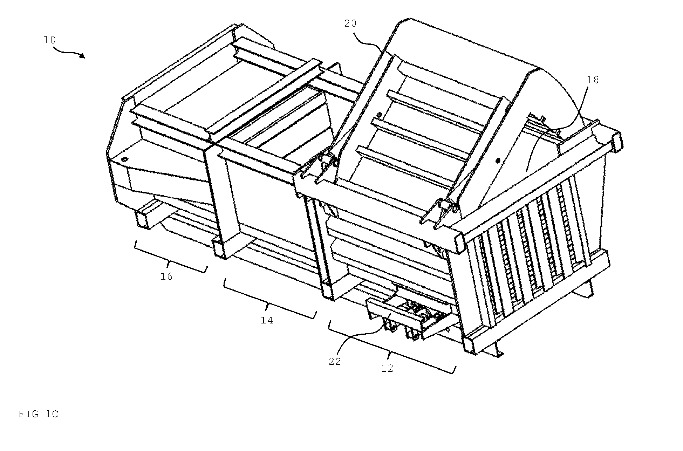

FIG 1 zeigt eine Ausführungsform eines Modells einer Ballenpresse 10 gemäß der Erfindung in einer Seitenansicht. Die Ballenpresse 10 umfasst - in der Darstellung von links nach rechts gesehen - unterschiedliche, jeweils horizontal nebeneinander angeordnete Funktionsbereiche, nämlich einen Hydraulikabschnitt 12, an den sich normalerweise oberhalb ein Hydraulikaggregat (nicht dargestellt) anschließt, einen Sammelabschnitt 14, an den sich normalerweise oberhalb ein Einwurfschacht (nicht dargestellt) anschließt und einen Press- und Auswurfabschnitt 16 mit dem dort im Inneren gebildeten Pressraum 18.

Im Hydraulikabschnitt 12 sind in an sich bekannter Art und Weise ein oder mehrere Hydraulikzylinder (nicht dargestellt) angebracht, die in ebenfalls an sich bekannter Art und Weise einen hier ebenfalls nicht dargestellten Pressstempel translatorisch in Richtung der Längsachse der Ballenpresse 10 bewegen, damit beim Betrieb der Ballenpresse 10 im Sammelabschnitt 14 zugeführtes Material im Pressraum 18 zu einem Ballen verdichtet wird.

Der Pressraum 18 hat eine quaderförmige Innenkontur und ist in Richtung auf den Sammelabschnitt 14 offen. Auf dieser Seite des Pressraums 18 tritt der Pressstempel in den Pressraum 18 ein.

Der Pressabschnitt 16 fungiert gleichzeitig als Auswurfabschnitt 16 und erlaubt einen seitlichen Auswurf gepresster Ballen, wobei sich die Richtungsangabe "seitlich" auf eine Richtung quer zur Bewegungsrichtung des Pressstempels bezieht. Um den seitlichen Auswurf zu ermöglichen, lässt sich der im Betrieb ansonsten allseitig geschlossene Pressraum 18 seitlich öffnen. Zu diesem Zweck ist eine Schwinge 20 vorgesehen, die in der Seitenansicht in FIG 1 in einer geöffneten Stellung gezeigt ist und deshalb oberhalb des ansonsten quaderförmigen oder im Wesentlichen quaderförmigen Pressabschnitts 16 erscheint.

Die Darstellung in FIG 1B zeigt die Ballenpresse gemäß FIG 1A in einer perspektivischen Ansicht teilweise von oben und teilweise von vorne, so dass bei der in geöffneter Stellung gezeigten Schwinge 20 zumindest teilweise ein Blick in den Pressraum 18 möglich ist. Am Boden des Pressraums 18 ist aus dieser Perspektive bereits eine Auswurfeinrichtung 22 erkennbar, die sich allgemein auch als Mittel zum seitlichen Auswerfen eines gepressten Ballens aus dem Pressraum 18 bezeichnen lässt und im Folgenden mit weiteren Details erläutert wird.

Zuvor zeigt die Darstellung in FIG 1C die Ballenpresse 10 gemäß FIG 1A noch in einer perspektivischen und teilweise rückwärtigen Ansicht. Man erkennt - genauso wie in FIG 1B - den nach oben offenen Sammelabschnitt 14, die geöffnete Schwinge 20, unterhalb derer ein Teil des Pressraums 18 sichtbar ist und einen rückwärtigen Abschnitt der Auswurfeinrichtung 22.

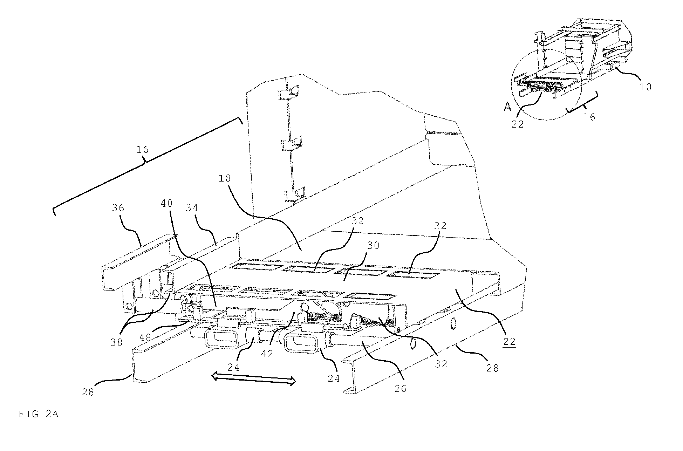

Die Darstellungen in FIG 2A bis FIG 3D zeigen die Auswurfeinrichtung 22 mit weiteren Details. Dabei zeigt die Darstellung in FIG 2A - wie die verkleinerte Gesamtdarstellung oben rechts erkennen lässt - einen Ausschnitt aus der Ballenpresse 10 im Bereich des Pressabschnitts 16 und dort die zum seitlichen Auswerfen gepresster Ballen vorgesehene Auswurfeinrichtung 22 in einer teilweise geschnittenen Darstellung.

Zum seitlichen Auswerfen gepresster Ballen ist die Auswurfeinrichtung 22 alternierend translatorisch beweglich und zwar senkrecht zur Längserstreckung der Ballenpresse 10 und damit senkrecht zur Bewegungsrichtung des Pressstempels. Diese alternierende Bewegungsrichtung ist in der Darstellung in FIG 2A durch den doppelseitigen Blockpfeil veranschaulicht. Die Auswurfeinrichtung 22 ist dafür mit Lagern 24 an zumindest zwei parallelen und als Führungselemente fungierenden Rohren 26 (nur eines sichtbar in FIG 2A) translatorisch beweglich gelagert. Die Lager 24 sind in oder an hier zwei Strukturelementen gebildet, die sich in Form von Profilelementen mit rechteckigem oder im Wesentlichen rechteckigem Querschnitt über die Breite oder im Wesentlichen über die Breite der Auswurfeinrichtung 22 erstrecken. Die Rohre 26 sind ihrerseits an Profilelementen einer als Rahmen fungierenden Unterkonstruktion 28 der Ballenpresse 10 fixiert.

Die Auswurfeinrichtung 22 umfasst des Weiteren eine einen Abschnitt einer Auflagefläche des Ballens im Pressraum 18 bildende Lade 30 mit Öffnungen für eine Mehrzahl von jeweils federbelasteten Auswerfern 32. In Richtung auf eine rückwärtige Seitenwand des Pressraums 18 (in der Darstellung in FIG 2A auf der linken Seite) umfasst die Auswurfeinrichtung 22 ein als Anschlag 34 fungierendes Profilelement und dahinter ein weiteres, als Träger 36 fungierendes Profilelement. Am Träger 36 greifen über abwärts gerichtete Laschen ein oder mehrere (hier zwei) Hydraulik- oder Pneumatikzylinder an. Die beiden Hydraulik-/Pneumatikzylinder fungieren als Mitnehmerzylinder 38 und sind - wie nachfolgend beschrieben wird - im Zusammenhang mit einer Beeinflussung einer Ausrichtung der Auswerfer 32 wirksam. Weil die Auswerfer 32 in zwei Reihen jeweils hintereinander angeordnet sind, ist bei der hier dargestellten Ausführungsform der Auswurfeinrichtung 22 jeder Reihe von hier jeweils vier Auswerfern 32 einer der beiden Mitnehmerzylinder 38 zugeordnet. Die Mitnehmerzylinder 38 sind Beispiele für eine auch in anderer Form, zum Beispiel mit einer horizontal orientierten Hubspindel, realisierbare Vorschubeinrichtung zur Beeinflussung einer Ausrichtung der Auswerfer 32.

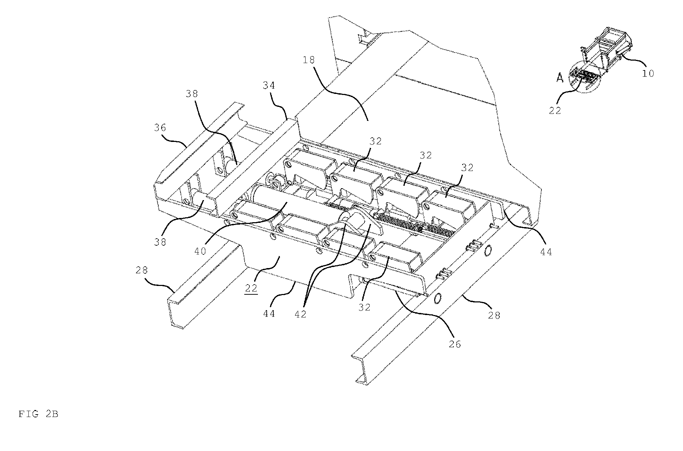

In der Darstellung in FIG 2B ist bei einer stärker auf die Oberfläche der Auswurfeinrichtung 22 gehenden Blickrichtung bei einer für die Darstellung abgenommenen Oberfläche der Lade 30 erkennbar, dass zwischen den beiden Mitnehmerzylindern 38 ein weiterer Hydraulikzylinder angeordnet ist, der als Auswurfzylinder 40 zum Antrieb der Auswurfeinrichtung 22 fungiert. Anstelle eines Auswurfzylinders 40 ist grundsätzlich auch jede andere zum Antrieb der Auswurfeinrichtung 22 geeignete Vorrichtung verwendbar, zum Beispiel eine horizontal orientierte Hubspindel oder ähnliches. Solche oder ähnliche Möglichkeiten werden zusammen mit dem Auswurfzylinder 40 allgemein als Vorschubeinheit bezeichnet.

Der Auswurfzylinder 40 ist zwischen den hier aufgrund der abgenommenen Oberfläche der Lade 30 gut einzeln erkennbaren beiden Reihen von je vier Auswerfern 32 angeordnet (nicht alle bezeichnet) und ist einerseits an der Unterkonstruktion 28 der Ballenpresse 10 und andererseits an der translatorisch bewegten Auswurfeinrichtung 22 angelenkt. Auf Seiten der Auswurfeinrichtung 22 dienen dafür zwei an den die Lager 24 (FIG 2A) tragenden Profilelementen angebrachte Laschen 42. Die Auswurfeinrichtung 22 selbst ist durch zwei seitliche Wangen 44 begrenzt. Die Wangen 44 sind ebenfalls an den die Lager 24 tragenden Profilelementen angebracht und die Wangen 44 tragen ihrerseits den Anschlag 34 und das als Träger 36 fungierende Profilelement. Die in entsprechend der gewählten Perspektive dem Betrachter zugewandte Wange 44 ist in FIG 2A aufgrund der dort gewählten Schnittebene nicht gezeigt.

Der Auswurfzylinder 40 dient zum getakteten Auswerfen eines im Pressraum 18 auf der Lade 30 der Auswurfeinrichtung 22 liegenden Ballens. Der Auswurfzylinder 40 fährt um eine gewisse Wegstrecke vor (Vorhub), beim hier dargestellten Modell einer Ausführungsform der erfindungsgemäßen Ballenpresse 10 um zum Beispiel 350mm. Das Ausfahren des Auswurfzylinders 40 bewirkt die schon bereits mehrfach erwähnte translatorische Bewegung der Auswurfeinrichtung 22. Der auszuwerfende (nicht dargestellte) Ballen liegt dabei zunächst noch an der Rückwand des Pressraums 18 (nur abschnittsweise dargestellt) und damit teilweise an der zum Inneren des Pressraums gewandten Fläche des Anschlags 34 an. Der mit der translatorischen Bewegung der Auswurfeinrichtung 22 bewirkte Vorschub des Anschlags 34 führt dazu, dass der seitlich im Bereich einer Unterkante des gepressten Ballens anliegende Anschlag 34 den Ballen teilweise - nämlich um die Strecke des jeweiligen Vorschubs, hier also zum Beispiel 350mm - aus dem Pressraum 18 schiebt.

Während der auszuwerfende Ballen noch im Pressraum 18 liegt, also vor Beginn des Auswurfvorgangs, bewirkt das Gewicht des Ballens, dass die Auswerfer 32 in einer horizontalen Ausrichtung gehalten werden, also durch den Ballen in fluchtender Ausrichtung mit der Oberkante der Lade 30 gehalten werden. Nachdem der Auswurfzylinder 40 und damit die Auswurfeinrichtung 22 insgesamt einmal vorgefahren (Vorhub) und anschließend wieder zurückgefahren (Rückhub) wurde, wird der oder jeder hintere, also der oder jeder dem Anschlag 34 nächste Auswerfer 32 frei und kann entsprechend der Federbelastung in den Pressraum 18 und damit zumindest über die Oberkante der Lade 30 schwenken. Jeder Auswerfer 32 ist an seinem langen Schenkel wie eine Kurvenscheibe geformt und die Außenkante der Kurvenscheibe oder jede andere am freien Ende des langen Schenkels des Auswerfers 32 gebildete Kontur kommt bei einer anschließenden, nochmaligen Vorwärtsbewegung der Auswurfeinrichtung 22 anstelle des Anschlags 34 mit dem auszuwerfenden Ballen in Kontakt und bewirkt während der Vorwärtsbewegung der Auswurfeinrichtung 22, dass der Ballen weiter aus dem Pressraum 18 herausgeschoben wird.

Konkret ist bei dem dargestellten Modell einer Ausführungsform der erfindungsgemäßen Ballenpresse 10 von folgenden Strecken auszugehen: Der Hub des Auswurfzylinders 40 beträgt ca. 350mm. Damit ist nach dem ersten Doppelhub des Auswurfzylinders 40 und der damit bewirkten Bewegung der Auswurfeinrichtung 22 der Ballen um ca. 350mm aus der Ballenpresse 10 ausgefahren, liegt also in einem Abstand von ca. 350mm von der Rückwand des Pressraums 18. In dieser Position ist grundsätzlich ein manuelles Abnehmen des Ballens aus der Ballenpresse 10 möglich. In dieser Position des Ballens ist - wie oben beschrieben - das erste Paar Auswerfer 32 frei geworden und steht damit über die Oberkante der Lade 30 in den Pressraum 18. Ein neuer Vorhub des Auswurfzylinders 40 bewegt die Auswurfeinrichtung 22 wieder um insgesamt ca. 350mm. Während des Vorhubs liegt der Ballen nach ca. 100mm Fahrweg an den Auswerfern 32 an und wird durch diese während des restlichen Vorhubs um weitere ca. 250mm aus dem Pressraum 18 geschoben. Während des Rückhubs des Auswurfzylinders 40 wird ein weiteres Paar Auswerfer 32 frei und steht über die Oberkante der Lade 30 in den Pressraum 18. Bei einem erneuten Vorhub des Auswurfzylinders 40 liegt der Ballen damit nach einem gewissen anfänglichen Fahrweg an dem zweiten Paar Auswerfer 32 an und wird durch diese weiter aus dem Pressraum 18 geschoben. Dieser Zyklus wiederholt sich durch alternierenden Vor- und Rückhub des Auswurfzylinders 40, bis der auszuwerfende Ballen seitlich aus der Ballenpresse 10 ausgeschoben ist. Dort kann der Ballen manuell oder automatisch aus dem Bereich der Ballenpresse 10 entfernt werden. Anschließend kann die Ballenpresse automatisch mittels einer der Ballenpresse 10 zugeordneten Steuerungseinrichtung zur Steuerung der elektrischen und hydraulischen Aggregate der Ballenpresse, oder manuell, durch entsprechende Bedienhandlungen an der Steuerungseinrichtung, in die Grundstellung gebracht werden, bei der speziell die Auswurfeinrichtung 22 maximal in den Pressraum 18 eingezogen ist und die Schwinge 20 den Pressraum 18 und dessen seitliche Öffnung verschließt.

Bei vier in Reihe hintereinander angeordneten Auswerfern 32 oder jeweils vier in mehreren, parallelen Reihen hintereinander angeordneten Auswerfern 32 sind fünf Doppelhübe des Auswurfzylinders 40 möglich. Beim ersten Doppelhub ist nur der Anschlag 34 wirksam. Bei jedem weiteren Doppelhub wird nacheinander jeweils einer der hintereinander angeordneten Auswerfer 32 wirksam. Insgesamt ergibt sich dabei - entsprechend der oben angenommen Zahlenwerte - bei einer Breite der Ballenpresse 10 von 1.100mm eine Strecke von 350mm + 4 x 250mm = 1.350mm = 135cm. Es besteht also die Möglichkeit, den Ballen vollständig aus der Ballenpresse 10 herauszubewegen und zum Beispiel auf eine Übergabestation zu schieben. Der Übergang auf die Übergabestation gestaltet sich dabei besonders einfach, weil aufgrund der getakteten, alternierenden Bewegung der Auswurfeinrichtung 22 diese nur um sehr geringe Strecken aus der Ballenpresse 10 herausbewegt wird. Des Weiteren ermöglicht die getaktete, alternierende Beweglichkeit der Auswurfeinrichtung 22 als Breite der Ballenpresse 10 eine Breite beizubehalten, wie sie bei einem Auswurf des Ballens in Richtung der Bewegung des Pressstempels möglich wäre.

Die Steuerung und Überwachung einer automatischen Aktivierung und Ausführung der mehrfachen Doppelhubvorgänge mittels einer dafür vorgesehenen, in den Figuren aber nicht dargestellten, grundsätzlich an sich bekannten Steuerungseinrichtung kann in ebenfalls grundsätzlich an sich bekannter Art und Weise erfolgen, indem die Steuerungseinrichtung den Auswurfzylinder 40 in Abhängigkeit von an der Ballenpresse 10 erfassten Sensordaten ansteuert. Als Sensoren zur Lieferung solcher Sensordaten kommen dabei alternativ oder kumulativ Endschalter, Wegmessvorrichtungen oder eine Zeiterfassung in Betracht. Die Endschalter können in Form von mechanischen Endschaltern oder in Form von induktiven oder kapazitiven Endschaltern oder in Form von auf optischer Basis arbeitenden Endschaltern (Lichtschranken) realisiert sein und sind an den Endpositionen der Hubvorgänge positioniert, um eine Umschaltung der Richtung des Hubvorgangs oder ein Abschalten des Auswurfzylinders 40 zu ermöglichen. Die von solchen Endschaltern erhältlichen Positionsinformationen können in äquivalenter Form auch mit Wegerfassungssensoren, zum Beispiel Inkrementalgebern oder dergleichen, generiert werden. Des Weiteren können solche Positionsinformationen in weitgehend äquivalenter Form und bei einer bekannten und konstanten Verfahrgeschwindigkeit des Auswurfzylinders 40 auch durch eine Zeiterfassung und entsprechend einen Ablauf vorgegebener Zeitwerte, zum Beispiel in Form eines Zählers oder dergleichen, generiert werden. Jede hier beschriebene und grundsätzlich auch weitere Möglichkeiten zur Generierung von Positionsinformationen ist für sich genommen für die Ansteuerung des Auswurfzylinders 40 grundsätzlich ausreichend. Für eine Erhöhung der Sicherheit der Ansteuerung des Auswurfzylinders 40 können einzelne oder mehrere Möglichkeiten im Hinblick auf eine Redundanz oder Diversität der Steuerung kombiniert werden.

Damit die Auswurfeinrichtung 22 den teilweise aus dem Pressraum 18 ausgeschobenen Ballen beim Rückhub nicht wieder und nach Möglichkeit auch nicht teilweise mit in den Pressraum 18 zieht, kann alternativ oder kumulativ Folgendes vorgesehen sein: Die Verhältnisse der Oberfläche der Lade 30 der Auswurfeinrichtung 22 zur sonstigen, nicht bewegten Bodenfläche des Pressraums 18 sind so gewählt, dass davon ausgegangen werden kann, dass die Haftreibung zwischen Ballen und unbeweglicher Bodenfläche des Pressraums 18 ausreicht, damit die Auswurfeinrichtung 22 beim Rückhub des Ballens ohne merkliche Beeinflussung der Position des Ballens zurückgezogen werden kann. Um den Reibschluss zwischen der unbeweglichen Bodenfläche des Pressraums 18 und der Unterseite des Ballens zu erhöhen, kann vorgesehen sein, das die unbewegliche Bodenfläche des Pressraums 18 ein Profil aufweist, zum Beispiel ein Profil nach Art eines Sägezahns oder dergleichen, das eine eventuelle Rückwärtsbewegung des Ballens beim Zurückziehen der Auswurfeinrichtung 22 verhindert. Als Alternative zu einem Profilblech kommen grundsätzlich auch Schweißpunkte auf der Bodenfläche des Pressraums 18 in Betracht. Um den Reibschluss zwischen der Oberfläche der mit einer Bewegung der Auswurfeinrichtung 22 beweglichen Lade 30 und einer Unterseite des Ballens zu verringern, kann vorgesehen sein, dass ein durch eine Oberseite der Lade 30 definiertes Niveau leicht unterhalb des Niveaus der Bodenfläche des Pressraums 18 liegt, so dass der Ballen im Wesentlichen auf der Bodenfläche des Pressraums 18 aufliegt und sich bereits damit dort eine erhöhte Haftreibung ergibt.

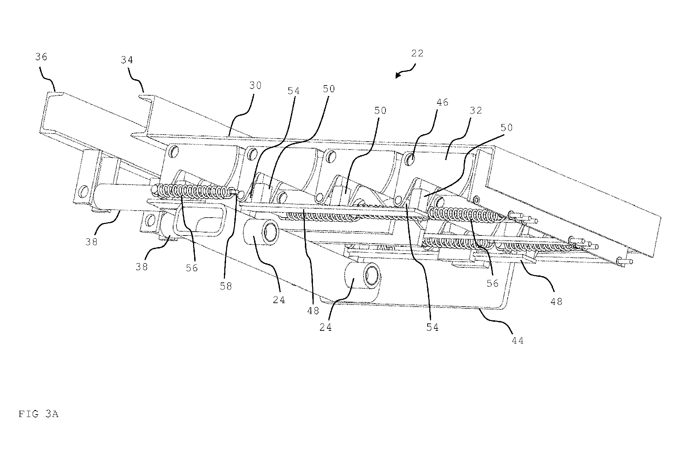

Nicht beschrieben ist bisher die für die Beweglichkeit der Auswerfer 32 vorgesehene Kinematik. Dafür wird zunächst auf die Darstellung in FIG 3A verwiesen, die eine perspektivische und teilweise geschnittene Ansicht der Auswurfeinrichtung 22 ohne Teile der Ballenpresse 10 zeigt. In dieser Darstellung sind auch besonders gut die manschettenförmigen Lager 24 zu erkennen, mit denen sich die Auswurfeinrichtung quer zur Längsrichtung der Ballenpressen 10 an den zwischen den Rahmenteilen (Unterkonstruktion 28) der Ballenpresse verlaufenden Rohren 26 (FIG 2A) bewegt. Die Lager 24 sind jeweils an einem Profilelement gebildet, das zwischen den beiden seitlichen Wangen 44 der Auswurfeinrichtung 22 verläuft; erkennbar ist dabei nur die in Blickrichtung hintere Wange 44, die zugehörige vordere Wange 44 ist in der Darstellung in FIG 3A aufgrund der gewählten Schnittebene nicht gezeigt. Die Auswurfeinrichtung 22 läuft damit insgesamt wie ein Schlitten auf den beiden Rohren 26, so dass sich damit deren translatorische Beweglichkeit ergibt.

Die gewählte Schnittebene gibt aber jedenfalls den Blick auf die Auswerfer 32 frei, die in FIG 3A in ihrer eingezogenen Position gezeigt sind. Jeder Auswerfer 32 weist zum Anbringen an einem als Drehachse 46 fungierenden und in den Wangen 44 gehaltenen Rundeisen oder dergleichen vorgesehene Bohrungen auf und ist damit an der Drehachse 46 schwenkbeweglich gelagert. Jeder Auswerfer 32 weist eine hier komplanar mit der Oberfläche der Lade 30 orientierte Oberfläche und zwei dazu senkrechte Seitenflächen auf (vgl. auch FIG 2B). Ausgehend von der Drehachse 46 weist jede der beiden Seitenflächen der Auswerfer 32 einen kurzen und einen langen Schenkel auf. Eine Oberkante der langen Schenkel der Auswerfer 32 definiert eine Position der zwischen den beiden Oberkanten gebildeten Oberfläche der Auswerfer 32 und ist bei der in FIG 3A gezeigten Situation fluchtend mit einer Oberkante der Lade 30 der Auswurfeinrichtung 22 orientiert. In dieser Position werden die Auswerfer 32 bei einer entsprechenden Stellung der Mitnehmerzylinder 38 durch diese gehalten. Die Mitnehmerzylinder 38 sind nämlich zur translatorischen Bewegung jeweils einer Mitnehmerkulisse 48, an der sich eine Mehrzahl von Mitnehmern 50 befindet, vorgesehen. Der Mitnehmerzylinder 38, die Freigabekulisse 48 und die Mitnehmer 50 sind dabei zur Freigabe der Auswerfer 32 wirksam und werden entsprechend einzeln oder zusammen allgemein auch als Freigabemittel bezeichnet.

Jede Mitnehmerkulisse 48 läuft in einer bei der Bewegung der Auswurfeinrichtung 22 ebenfalls mitbewegten Führung 52. Dafür befinden sich die Führungen 52 an den die Lager 24 tragenden Profilelementen. Die Mitnehmer 50 liegen in der in FIG 3A gezeigten Konfiguration an am freien Ende der kurzen Schenkel angebrachten und zwischen den beiden Seitenflächen der Auswerfer 32 verlaufenden Stegen 54 an. Damit bewirken die Mitnehmer 50 die hier dargestellte horizontale Ausrichtung der Auswerfer 32, und zwar gegen eine von einer für jeden Auswerfer 32 von einem Federelement, zum Beispiel von einer Schraubenzugfeder 56, hier von einem Paar von auf beiden Seiten jedes Auswerfers 32 angebrachten Schraubenzugfedern 56, aufgebrachten Rückstellkraft.

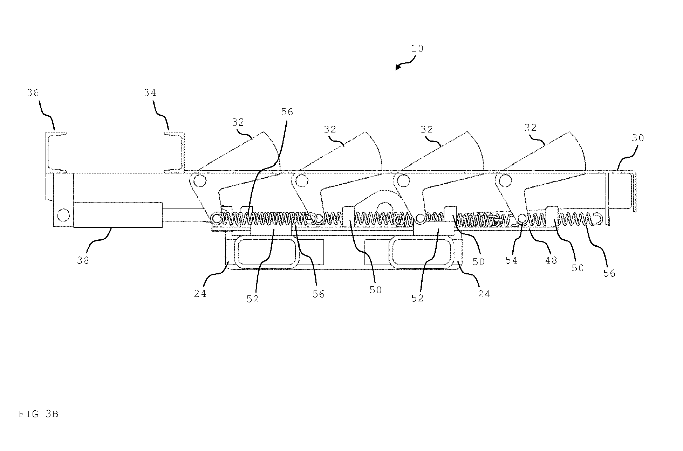

FIG 3B zeigt dazu in einer geschnittenen Seitenansicht der Auswurfeinrichtung 22 die unter Wirkung der Schraubenzugfedern 56 resultierende, entlastete Orientierung der Auswerfer 32. Die Schraubenzugfedern 56 sind damit Beispiele für eine grundsätzlich auch anders realisierbare Aktivierung der Auswerfer 32. Zum Beispiel kommt grundsätzlich auch eine horizontal orientierte Blattfeder oder eine horizontal orientierte Schraubenfeder in Betracht. Solche und weitere, hier nicht ausdrücklich erwähnte Möglichkeiten sind im allgemeinen Beschreibungsteil zusammen mit der Schraubenzugfeder und dem Begriff Aktivierungselement zusammengefasst.

Der Umfang der aufgrund der Federkraft der Schraubenzugfedern 56 resultierenden Schwenkbewegung der Auswerfer 32 kann durch einen Anschlag (nicht dargestellt) oder durch den Federweg der Schraubenzugfedern 56 begrenzt sein. Die Federkraft der Schraubenzugfedern 56 wird jedenfalls freigegeben, wenn durch die beiden Mitnehmerzylinder 38 die Mitnehmerkulisse 48 bewegt und damit die Mitnehmer 50 vom jeweiligen Auswerfer 32 (genauer von dessen als Anschlag für die Mitnehmer 50 fungierenden Steg 54) entfernt werden. Diese Position der Mitnehmerkulisse 48 wird durch eine entsprechende Aktivierung der Mitnehmerzylinder 38 im Zusammenhang mit dem ersten Doppelhub des Auswurfzylinders 40, jedenfalls vor Beginn des zweiten Doppelhubs des Auswurfzylinders 40, eingenommen. Tatsächlich kommt es nicht darauf an, wann die Auswerfer 32 vor Beginn des zweiten Doppelhubs freigegeben werden, denn während des Vorhubs des ersten Doppelhubs befindet sich der auszuwerfende Ballen noch im Pressraum 18 und liegt damit auf allen Auswerfern 32, die damit aufgrund des Gewichts des Ballens nicht ausschwenken können, so dass es auf die Position der Mitnehmerkulisse 48 nicht ankommt. Beim Rückhub des ersten Doppelhubs wird im Verlauf des Zurückziehens der Auswurfeinrichtung 22 irgendwann das erste Paar Auswerfer 32 frei und könnte damit ausschwenken. Weil die ausgeschwenkte Position der Auswerfer 32 erst beim (nächsten) Vorhub relevant wird, kommt es auch hier auf die Position der Mitnehmerkulisse 48 nicht an. Erst beim Vorhub des zweiten Doppelhubs und jedes weiteren Doppelhubs müssen einzelne Auswerfer 32 ausgeschwenkt und andere Auswerfer 32 ausschwenkbar sein, damit diese zum Ausschieben des Ballens wirksam sein können. Dementsprechend muss durch die Mitnehmerzylinder 38 die Mitnehmerkulisse 48 entweder im Zusammenhang mit dem ersten Doppelhub und spätestens bei Beginn des zweiten Doppelhubs zur Freigabe der Auswerfer 32 bewegt werden. Aus steuerungstechnischen Gründen kann es sich anbieten, die Freigabe der Auswerfer 32 durch entsprechende Ansteuerung der Mitnehmerzylinder 38 zusammen mit einer Ansteuerung des Auswurfzylinders 40 für den Vorhub des ersten Doppelhubs anzusteuern, weil dann für die Ansteuerung der Mitnehmerzylinder 38 kein Zähler oder dergleichen benötigt wird.

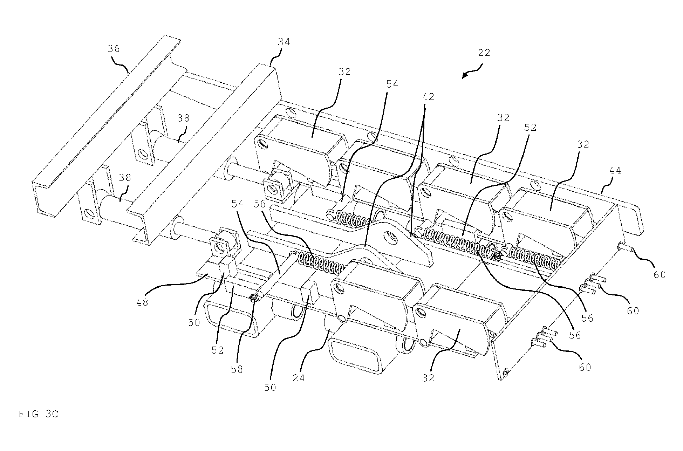

Die Darstellung in FIG 3C zeigt in einer perspektivischen und teilweise geschnittenen Ansicht die Auswurfeinrichtung 22 ohne deren Oberfläche. Man erkennt hier besonders gut die Mitnehmerkulisse 48 in Form eines streifenförmigen Teils, zum Beispiel in Form eines Metallteils, auf dem sich in regelmäßigen Abständen die Mitnehmer 50 in Form von quaderförmigen Erhebungen, zum Beispiel angeschweißten oder in sonstiger Art und Weise mit der Mitnehmerkulisse 48 fest verbundenen Metallteilen, befinden. Des Weiteren ist erkennbar, dass jedem Auswerfer 32 beidseitig jeweils eine Schraubenzugfeder 56 zugeordnet ist und dass die inneren Schraubenzugfedern 56 in zueinander parallelen Ebenen angeordnet sind. Die äußeren, also die zwischen den Auswerfern 32 und einer jeweils angrenzenden Wange 44 liegenden Schraubenfedern 56 (in FIG 3C nicht dargestellt, siehe zum Beispiel die eine in FIG 3A dargestellte außen liegende Schraubenfeder 56) greifen einerseits an dem dem jeweiligen Auswerfer 32 zugeordneten Steg 54 und andererseits an einer zum Beispiel an der Wange 44 angebrachten Öse 58 (jeweils nur eine dargestellt) an. Die innen liegenden Schraubenfedern 56 greifen auf der einen Seite ebenfalls an dem dem jeweiligen Auswerfer 32 zugeordneten Steg 54 und auf der anderen Seite an einem zu einer Vorderkante der Auswurfeinrichtung geführten und dort fixierten Draht 60 an. Ein solcher Draht 60 kann auch für die Öse 58 der letzten außen liegenden Schraubenzugfeder 56 vorgesehen sein. Die durch Drähte 60 gehaltenen Ösen 58 für die innenliegenden Schraubenzugfedern 56 erlauben den Verzicht auf innenliegende Strukturteile nach Art der äußeren Wangen 44 und stellen damit eine sinnvolle Möglichkeit für eine Einsparung von Gewicht und Material im Bereich der Auswurfeinrichtung 22 dar.

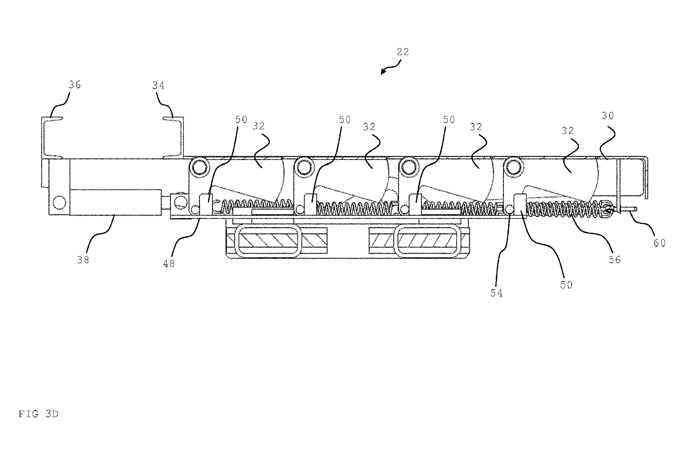

Nach dem letzten Vorhub des Auswurfzylinders 40 wird die Auswurfeinrichtung 22 durch einen anschließenden Rückhub des Auswurfzylinders 40 wieder in deren Ausgangsposition für einen späteren erneuten Auswurf eines gepressten Ballens aus dem Pressraum 18 gefahren. Im Zusammenhang mit diesem letzten Rückhub des Auswurfzylinders 40 werden auch die Auswerfer 32 wieder eingeschwenkt, also hinsichtlich ihrer Oberseiten in eine mit der Oberfläche der Lade 30 parallele Ausrichtung gebracht, wie sie in FIG 3A und FIG 3D gezeigt ist. Dafür wird der oder jeder Mitnehmerzylinder 38 aktiviert, so dass ein Zurückziehen der oder jeder Mitnehmerkulisse 48 resultiert. Beim Zurückziehen der Mitnehmerkulisse(n) 48 kommen die dort angebrachten Mitnehmer 50 mit den Stegen 54 der Auswerfer 32 in Kontakt und bewirken beim weiteren Zurückziehen der Mitnehmerkulisse(n) 48 bis zum Abschalten des oder jedes Mitnehmerzylinders 38 das Einschwenken der Auswerfer 32. Das Zurückziehen erfolgt (nur) gegen die Federkraft der Schraubenzugfedern 56, so dass als Mitnehmerzylinder 38 klein dimensionierte Hydraulikzylinder oder sogar klein dimensionierte Pneumatikzylinder in Betracht kommen. Wegen des an der Ballenpresse 10 vorhandenen Hydraulikaggregats bietet es sich normalerweise an, als Mitnehmerzylinder 38 Hydraulikzylinder zu verwenden.

FIG 3D zeigt die eingeschwenkte Konfiguration der Auswerfer 32 in einer geschnittenen Seitenansicht mit einer durch die in einer Reihe hintereinander angeordneten Schnittebene, so dass die zwischen den Seitenflächen der Auswerfer 32 befindlichen Stege 54 und die an diesen anliegenden Mitnehmer 50 erkennbar sind. In dieser Konfiguration ist die Oberfläche der Auswurfeinrichtung 22 eben und das Verdichten eines neuen Ballens kann beginnen, der später durch einen neuen Auswurfvorgang der eben beschriebenen Art ebenfalls seitlich aus der Ballenpresse 10 ausgeworfen werden kann.

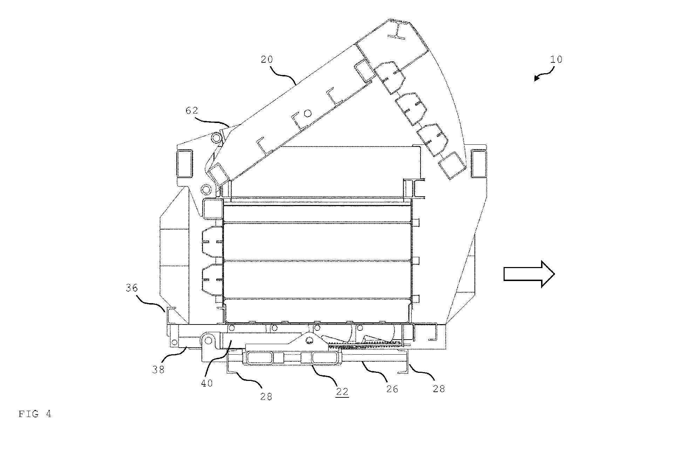

FIG 4 zeigt einen Querschnitt durch die Ballenpresse 10 mit einer durch den Pressraum 18 verlaufenden Schnittebene. Die Auswurfrichtung der gepressten Ballen ist mit dem nach rechts weisenden Blockpfeil gezeigt. Die Schwinge 20 ist in geöffneter Stellung gezeigt und hier wird deren bereits in FIG 1B und FIG 1C erkennbare L-Form mit einem langen, die Oberseite des Pressraums 18 übergreifenden und einem kurzen, bei abgesenkter Schwinge 20 als Seitenwand des Pressraums 18 fungierenden Schenkel besonders deutlich. An ihrem kurzen Schenkel umfasst die Schwinge 20 eine Mehrzahl von parallel übereinander angeordneten Profilelementen, deren zum Pressraum 18 gewandte Oberflächen die Seitenwand des Pressraums 18 bilden. Das Anheben und Absenken der Schwinge 20 zum Öffnen beziehungsweise Schließen des Pressraums 18 erfolgt mit einem oder mehreren als Hubzylinder 62 fungierenden Hydraulikzylindern. Die Schwinge 20 und der oder jeder zur Bewegung der Schwinge 20 vorgesehene Hubzylinder 62 oder funktionsäquivalente Betätigungselemente stellen damit speziell im allgemeinen Beschreibungsteil so bezeichnete Mittel zum seitlichen Öffnen des Pressraums 18 dar.

Die L-förmige Gestalt der Schwinge 20 und die damit mögliche Position der Schwenkachse der Schwinge 20 gegenüberliegend von der zu öffnenden Seite des Pressraums 18 bewirkt, dass der kurze Schenkel der Schwinge 20 und damit die dort gebildete Seitenfläche des Pressraums 18 eine Druckbelastung erfährt, die als Zugspannung in den langen Schenkel der Schwinge 20 gegeben wird. Die Drehachse muss damit diese Zug-/Druckbelastung, aber kein oder nur ein verschwindend geringes Drehmoment aufnehmen. Eine besonders hohe, von dem oder jedem Hubzylinder 62 aufzubringende Zuhaltekraft ist damit nicht erforderlich und der/die Hubzylinder 62 können damit entsprechend kleiner dimensioniert werden. Dies ist ein wesentlicher und vorteilhafter Unterschied zu einer ansonsten ebenfalls möglichen Realisierung einer zu öffnenden Seitenwand des Pressraums 18 in Form einer an der Seite der zu öffnenden Seitenwand schwenkbar angelenkten Tür. Aus Gründen der Übersichtlichkeit sind in der Darstellung in FIG 4 nicht alle Elemente der Auswurfeinrichtung 22 bezeichnet; insofern wird auf die vorangehenden Darstellungen verwiesen. Anhand der Darstellung der Auswurfeinrichtung 22 wird allerdings erkennbar, dass die in FIG 4 für den gezeigten Querschnitt gewählte Schnittebene zwischen dem Auswurfzylinder 40 und einem der Mitnehmerzylinder 38 und den davon betätigten Auswerfern 32 liegt.

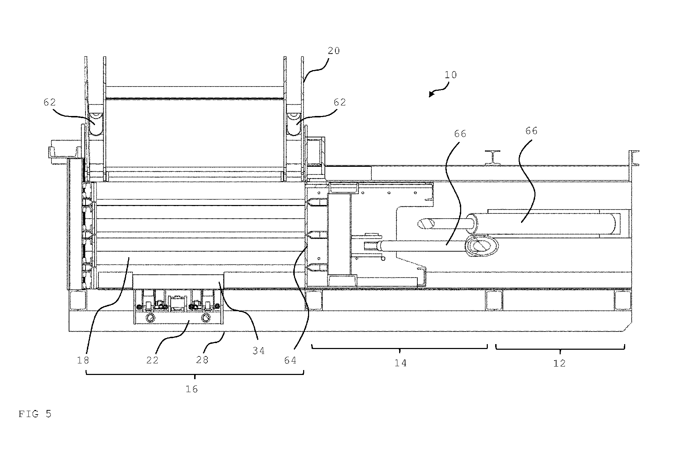

FIG 5 zeigt abschließend einen Längsschnitt durch die Ballenpresse 10 mit einer nahe der durch die Schwingen 20 verschließbaren Seitenwand des Pressraums 18 verlaufenden Schnittebene. Hier ist der Pressstempel 64 zum Verdichten des Pressguts gezeigt. Der Pressstempel 64 befindet sich mit seiner zum Verdichten des Pressguts wirksamen Vorderseite im Bereich eines Übergangs zwischen dem Sammelabschnitt 14 und dem Press- und Auswurfabschnitt 16, also in einer Position, die derjenigen Position eines letzten Vorhubs des Pressstempels 64 beim Bilden eines Ballens, bevor dieser anschließend ausgeworfen wird, entspricht. Ausgehend vom Hydraulikabschnitt 12 sind zwei zum Bewegen des Pressstempels 64 vorgesehene und über Kreuz angeordnete Pressstempelhydraulikzylinder 66 gezeigt.

Einzelne im Vordergrund stehende Aspekte der hier eingereichten Beschreibung lassen sich damit kurz wie folgt zusammenfassen: Angegeben werden eine Ballenpresse 10 für loses Pressgut, insbesondere für als Rohstoff wiederverwendbare Abfallstoffe, mit einem Hydraulikabschnitt 12, einem daran anschließenden Sammelabschnitt 14 und einem an diesen anschließenden Press- und Auswurfabschnitt 16 mit einem dort gebildeten Pressraum 18, und ein Verfahren zum Betrieb einer solchen Ballenpresse 10, wobei die Ballenpresse 10 zum Erhalt einer möglichst geringen benötigten Grundfläche Mittel 20, 62 zum seitlichen Öffnen des Pressraums 18 und Mittel 22 zum seitlichen Auswerfen eines gepressten Ballens aus dem Pressraum 18 aufweist.

### Bezugszeichenliste

- 10: Ballenpresse
- 12: Hydraulikabschnitt
- 14: Sammelabschnitt
- 16: Press- und Auswurfabschnitt
- 18: Pressraum
- 20: Schwinge
- 22: Auswurfeinrichtung
- 24: Lager
- 26: Rohr
- 28: Unterkonstruktion
- 30: Lade
- 32: Auswerfer
- 34: Anschlag
- 36: Träger
- 38: Mitnehmerzylinder
- 40: Auswurfzylinder
- 42: Lasche
- 44: Wange
- 46: Drehachse
- 48: Mitnehmerkulisse
- 50: Mitnehmer
- 52: Führung
- 54: Steg
- 56: Schraubenzugfeder
- 58: Öse
- 60: Draht
- 62: Hubzylinder
- 64: Pressstempel
- 66: Pressstempelhydraulikzylinder

## Patentansprüche

1. Ballenpresse (10) für loses Pressgut, insbesondere für Papier oder sonstige als Rohstoff wiederverwendbare Abfallstoffe, mit einem Hydraulikabschnitt (12), einem daran anschließenden Sammelabschnitt (14) und einem an diesen anschließenden Press- und Auswurfabschnitt (16) mit einem dort gebildeten Pressraum (18),
**gekennzeichnet durch** Mittel (20, 62) zum seitlichen Öffnen des Pressraums (18) und Mittel (22) zum seitlichen Auswerfen eines gepressten Ballens aus dem Pressraum (18).

2. Ballenpresse (10) nach Anspruch 1, wobei als Mittel zum seitlichen Öffnen des Pressraums (18) eine durch mindestens ein Betätigungselement, insbesondere mindesten einen Hubzylinder (62) schwenkbar bewegliche, im Querschnitt L-förmige Schwinge (20) fungiert, deren langer Schenkel den Pressraum (18) übergreift und deren kurzer Schenkel bei abgesenkter Schwinge (20) zum seitlichen Verschließen des Pressraums (18) wirksam ist.

3. Ballenpresse (10) nach Anspruch 1 oder 2, wobei als Mittel zum seitlichen Auswerfen eines gepressten Ballens aus dem Pressraum (18) eine quer zur Längsachse der Ballenpresse (10) bewegliche, insbesondere eine alternierend translatorisch bewegliche Auswurfeinrichtung (22) fungiert.

4. Ballenpresse (10) nach Anspruch 3, wobei die Auswurfeinrichtung (22) einen in einer Grundposition der Auswurfeinrichtung (22) mit einer Rückwand des Pressraums (18) fluchtenden Anschlag (34) und vor dem Anschlag (34) eine Mehrzahl von verstellbaren Auswerfern (32) aufweist.

5. Ballenpresse (10) nach Anspruch 4, wobei die Auswerfer (32) durch mit der Auswurfeinrichtung (22) bewegte Freigabemittel (38, 48, 50) freigebbar sind, derart, dass freigegebene Auswerfer (32) aus einer Grundposition unterhalb einer Bodenfläche des Pressraums (18) oder bis zur Bodenfläche des Pressraums (18) in den Pressraums (18) eintreten können.

6. Ballenpresse (10) nach Anspruch 5, wobei die Auswerfer (32) an der Auswurfeinrichtung (22) schwenkbeweglich angebracht sind und wobei die Auswerfer (32) in einer Grundposition mit ihrer Oberseite fluchtend mit einer Oberfläche der Auswurfeinrichtung (22) orientiert sind und wobei die Auswerfer (32) im freigegebenen Zustand in den Pressraum (18) schwenken.

7. Ballenpresse (10) nach Anspruch 4, 5 oder 6, wobei als Freigabemittel eine durch eine Vorschubeinrichtung (38), insbesondere einen Mitnehmerzylinder (38), translatorisch bewegliche Mitnehmerkulisse (48) mit daran angebrachten Mitnehmern (50) fungiert, wobei die Mitnehmer (50) in der Grundposition der Auswerfer (32) an diesen, insbesondere einem dafür vorgesehenen Teil (54) der Auswerfer (32), anliegen.

8. Ballenpresse (10) nach Anspruch 4, 5, 6 oder 7, wobei jedem Auswerfer (32) ein Aktivierungselement (56), insbesondere ein Aktivierungselement (56) in Form einer Feder, insbesondere in Form einer Schraubenzugfeder (56), zugeordnet ist und wobei das Aktivierungselement (56) zur Verstellung des jeweiligen Auswerfers (32) wirksam ist.

9. Ballenpresse (10) nach einem der Ansprüche 3 bis 8, wobei die Auswurfeinrichtung (22) schlittenförmig auf zumindest einem an einer Unterkonstruktion (28) der Ballenpresse (10) quer zur Längsachse der Ballenpresse (10) orientierten Führungselement (26) translatorisch beweglich ist.

10. Verfahren zum Betrieb einer Ballenpresse (10) nach einem der vorangehenden Ansprüche, wobei nach Abschluss eines Pressvorgangs ein dadurch gebildeter gepresster Ballen aus der Ballenpresse (10) ausgeworfen wird, indem durch Anheben der Schwinge (20) eine Seite des Pressraums (18) geöffnet wird und indem durch Aktvierung einer Auswurfeinrichtung (22) der gepresste Ballen seitlich ausgeworfen wird.

11. Verfahren nach Anspruch 10, wobei die Auswurfeinrichtung (22) alternierend mehrfach mit jeweils einem Vorhub und einem anschließenden Rückhub quer zur Längsachse der Ballenpresse (10) bewegt wird.

12. Verfahren nach Anspruch 11, wobei bei einem ersten Vorhub der Auswurfeinrichtung (22) ein davon umfasster Anschlag (34) den gepressten Ballen um eine erste Wegstrecke aus dem Pressraum (18) bewegt, wobei von der Auswurfeinrichtung (22) umfasste und spätestens bei einem nächsten Vorhub der Auswurfeinrichtung (22) freigegebene Auswerfer (32) den gepressten Ballen um eine weitere Wegstrecke aus dem Pressraum (18) bewegen und wobei bei jedem weiteren Vorhub der Auswurfeinrichtung (22) weitere Auswerfer (32) den Ballen jeweils sukzessive weiter aus dem Pressraum (18) bewegen.

13. Verfahren nach Anspruch 12, wobei die in der Auswurfeinrichtung (22) beweglich, insbesondere schwenkbeweglich und in einer oder mehreren quer zur Längsrichtung der Ballenpresse (10) orientierten Reihen jeweils hintereinander angeordneten Auswerfer (32) im freigegebenen Zustand in den Pressraum (18) eintreten können, wobei ein solches Eintreten in den Pressraum (18) durch einen eventuell aufliegenden Abschnitt des auszuwerfenden Ballens verhindert wird und wobei damit sukzessive mit dem stückweisen Auswerfen des Ballens jeweils ein weiterer Auswerfer (32) oder eine Mehrzahl nebeneinander angeordneter Auswerfer (32) in den Pressraum (18) eintritt.

14. Verfahren nach Anspruch 13, wobei das Auswerfen eines gepressten Ballens aus dem Pressraum (18) folgende Verfahrensschritte umfasst:
mit einem ersten Vorhub der Auswurfeinrichtung (22) wird durch deren Anschlag (34) der Ballen um eine erste Wegstrecke aus dem Pressraum (18) bewegt,
mit einem anschließenden ersten Rückhub wird die Auswurfeinrichtung (22) wieder in ihre Ausgangsposition bewegt, während der Ballen in seiner teilweise ausgeworfenen Position bleibt,
spätestens vor einem zweiten Vorhub der Auswurfeinrichtung (22) werden die Auswerfer (32) durch eine erste Aktivierung einer dafür vorgegebenen Freigabeeinrichtung (38, 48, 50) freigegeben,
freigegebene Auswerfer (32) treten in den Pressraum (18) ein und können in diesem Zustand bei einem Vorhub der Auswurfeinrichtung (22) zum weiteren Auswerfen des Ballens wirksam werden,
spätestens beim zweiten Vorhub befindet sich der dem Anschlag (34) nächstliegende Auswerfer (32) oder befinden sich mehrere in Längsrichtung der Ballenpresse (10) benachbarte und jeweils dem Anschlag (34) nächstliegende Auswerfer (32) in dem in den Pressraum (18) eingetretenen Zustand,
beim zweiten Vorhub der Auswurfeinrichtung (22) wird der Ballen mittels des oder jedes bis dahin in den Pressraum (18) eingetretenen Auswerfers (32) um eine zweite Wegstrecke weiter aus dem Pressraum (18) bewegt,
mit einem anschließenden zweiten Rückhub wird die Auswurfeinrichtung (22) wieder in ihre Ausgangsposition bewegt, während der Ballen in seiner teilweise ausgeworfenen Position bleibt,
beim Rückhub tritt zumindest ein weiterer oder treten mehrere weitere, einander benachbarte Auswerfer (32) in den Pressraum (18) ein, sobald deren Oberseite beim Rückhub von der Unterseite des Ballens frei wird;
bei einem nächsten Vorhub der Auswurfeinrichtung (22) wird der oder jeder zuletzt in den Pressraum (18) eingetretene Auswerfer (32) zum weiteren Auswerfen des Ballens um eine weitere Wegstrecke aktiv,
beim nächsten Rückhub der Auswurfeinrichtung (22) treten ein oder mehrere weitere Auswerfer (32) in den Pressraum (18) ein, sobald dessen bzw. deren Oberseite von der Unterseite des Ballens frei wird,
es folgen jeweils ein weiterer Vorhub und ein anschließender Rückhub der Auswurfeinrichtung (22), bis jeder von der Auswurfeinrichtung (22) umfasste Auswerfer (32) beim Auswerfen des Ballens wirksam geworden ist,
im Zusammenhang mit einem abschließenden Rückhub der Auswurfeinrichtung (22) wird mittels einer entsprechenden zweiten Aktivierung der Freigabeeinrichtung (38, 48, 50) die Freigabe der Auswerfer (32) aufgehoben und deren Eintritt in den Pressraum (18) rückgängig gemacht.

15. Verfahren nach Anspruch 14, wobei als Freigabeeinrichtung eine Vorschubeinrichtung (38), insbesondere in Form eines Mitnehmerzylinders (38), eine translatorisch bewegliche Mitnehmerkulisse (48) und daran angebrachte Mitnehmern (50) fungieren, wobei beim ersten Aktivieren der Freigabeeinrichtung durch die Vorschubeinrichtung (38) die Mitnehmerkulisse (48) in eine Position bewegt wird, in der die Mitnehmer (50) von den Auswerfern (32) entfernt sind und damit einen Eintritt der Auswerfer (32) in den Pressraum (18) freigeben und wobei beim zweiten Aktivieren der Freigabeeinrichtung durch die Vorschubeinrichtung (38) die Mitnehmerkulisse (48) in eine Position bewegt wird, in die Mitnehmer (50) die Auswerfer (32) oder einen Teil der Auswerfer (32) berühren und damit einen Eintritt der Auswerfer (32) in den Pressraum (18) verhindern.
